# FASCICULE DE BREVET EUROPEEN

(11) **EP 3 481 537 B1**
(45) Date de publication et mention de la délivrance du brevet: **25.03.2020**
(21) Numéro de dépôt: 17745432.9
(22) Date de dépôt: 06.07.2017
(51) Int. Cl.: B01D 61/00

(54) **PROCÉDÉ D'EXTRACTION PAR OSMOSE DIRECTE D'UN COMPOSÉ CONTENU DANS UNE SOLUTION LIQUIDE**
VERFAHREN ZUR EXTRAKTION EINER IN EINER FLÜSSIGEN LÖSUNG ENTHALTENEN VERBINDUNG DURCH VORWÄRTSOSMOSE
METHOD FOR EXTRACTING A COMPOUND CONTAINED IN A LIQUID SOLUTION BY FORWARD OSMOSIS

(30) Priorité: 08.07.2016 FR 1656606
(43) Date de publication de la demande: 15.05.2019
(73) Titulaire: Ederna, 31100 Toulouse (FR)
(72) Inventeur: GASCONS VILADOMAT, Fabrice, 31500 Toulouse (FR); MAUGIN, Thomas, 31300 Toulouse (FR)
(74) Mandataire: Ipside
(86) Numéro de dépôt international: PCT/FR2017/051843
(87) Numéro de publication internationale: WO 2018/007759

(56) Documents cités:
- WO-A1-02/090311
- WO-A1-2007/063098
- WO-A1-2013/148289
- FR-A1- 2 993 788
- KR-A- 20150 070 895
- QINGCHUN GE ET AL: "Draw solutions for forward osmosis processes: Developments, challenges, and prospects for the future", JOURNAL OF MEMBRANE SCIENCE, vol. 442, 6 avril 2013 (2013-04-06), pages 225-237, XP055149800, ISSN: 0376-7388, DOI: 10.1016/j.memsci.2013.03.046

## Description

La présente invention s'inscrit dans le domaine de la concentration des solutions liquides par les procédés d'osmose, plus particulièrement par les procédés d'osmose directe.

Plus particulièrement, la présente invention concerne un procédé d'extraction, par osmose directe, d'un composé déterminé contenu dans une solution liquide, mettant en oeuvre une solution d'extraction de composition particulière. L'invention concerne en outre l'utilisation de lactate de potassium dans un procédé d'osmose directe.

De manière générale, l'osmose est définie comme le transfert d'un solvant d'une solution diluée, de faible pression osmotique, vers une solution concentrée, de plus forte pression osmotique, au travers d'une membrane semi-perméable, plus précisément perméable audit solvant mais non aux solutés.

En particulier, dans les procédés réalisant l'extraction de solvant d'une solution liquide par osmose directe, dits procédés d'osmose directe, le solvant à extraire de la solution, dite solution d'alimentation, est mis en contact avec une première face d'une membrane semi-perméable, généralement la face au niveau de laquelle est disposée une couche active de la membrane. Une autre solution, dite solution d'extraction, est mise en contact avec la face opposée de la membrane, généralement la face au niveau de laquelle est disposée une couche dite support de la membrane. La solution d'extraction est typiquement une solution aqueuse très concentrée en un sel de forte pression osmotique. Lors de la mise en œuvre du procédé, le solvant est transporté, à travers la membrane, depuis la solution d'alimentation vers la solution d'extraction, c'est-à-dire depuis la solution de plus basse pression osmotique vers la solution de plus haute pression osmotique, la force motrice du système étant liée à la différence de pression osmotique entre les deux solutions. Ces procédés sont généralement mis en œuvre pour l'extraction d'eau de la solution d'alimentation. Ils peuvent également être mis en œuvre de manière similaire pour l'extraction de la solution d'alimentation de tout autre composé d'intérêt que l'eau, par un choix adéquat de la membrane et de la solution d'extraction.

Les procédés d'osmose directe sont mis en œuvre depuis longtemps pour le dessalement de l'eau de mer.

Plus récemment, il a été proposé par l'art antérieur d'utiliser l'osmose directe pour la concentration de solutions liquides d'intérêt, par exemple dans le domaine alimentaire, le domaine de la santé ou le domaine cosmétique, par extraction d'une partie ou de la totalité de l'eau contenue dans ces solutions. L'intérêt de cette technologie est notamment qu'elle permet de concentrer la solution d'intérêt tout en y conservant intacts les autres composés, y compris les composés thermosensibles. Ceci s'avère en particulier tout à fait avantageux dans les cas où ces autres composés sont de haute valeur ajoutée, tels que des arômes, vitamines, colorants naturels, principes actifs, etc.

Les solutions d'extraction mises en œuvre de manière classique dans de tels procédés sont des solutions aqueuses contenant un sel tel que le chlorure de sodium, le chlorure de calcium ou le nitrate de calcium par exemple. Ces solutions sont couramment qualifiées d'agents osmotiques.

Il a notamment été proposé par l'art antérieur, illustré par exemple par le document WO-A-2013/148289, ou par le document KR 2015 0070895, de mettre en œuvre, en tant que solution d'extraction, une solution aqueuse contenant un tensioactif soluble dans l'eau, et plus particulièrement un tensioactif anionique, tel que le lactate de sodium.

Les agents osmotiques proposés par l'art antérieur, et compatibles avec le domaine alimentaire, présentent cependant tous des inconvénients, en particulier une faible efficacité et/ou une forte rétrodiffusion des sels à travers la membrane. Le terme rétrodiffusion est employé ici pour désigner le phénomène selon lequel le sel contenu dans la solution d'extraction diffuse à travers la membrane vers la solution d'alimentation, ce qui s'avère bien évidemment préjudiciable lorsque la solution d'alimentation est une solution contenant des composés à haute valeur ajoutée, que le procédé d'osmose directe vise à concentrer et/ou à purifier.

La présente invention vise à remédier aux inconvénients des procédés proposés par l'art antérieur pour l'extraction par la technique d'osmose directe d'un composé déterminé d'une solution liquide qui le contient, en proposant un procédé d'osmose directe qui permette de réaliser une telle extraction rapidement et efficacement, en limitant en outre la rétrodiffusion du sel de l'agent osmotique à travers la membrane.

Ainsi, selon un premier aspect, il est proposé par la présente invention un procédé d'extraction par osmose directe d'un composé déterminé contenu dans une solution liquide, dite solution d'alimentation, selon lequel : on fait circuler la solution d'alimentation au contact d'une première face d'une membrane apte à permettre sélectivement le transfert par osmose du composé déterminé à son travers, et on fait circuler une deuxième solution liquide, dite solution d'extraction, au contact d'une deuxième face de la membrane opposée à la première face. La solution d'extraction contient du lactate de potassium, en solution dans un solvant.

De préférence, le lactate de potassium est le composant majoritaire en solution dans le solvant de la solution d'extraction. Préférentiellement, la solution d'extraction consiste essentiellement en du lactate de potassium en solution dans le solvant.

Le terme solvant englobe ici également les mélanges de solvants.

Il a été constaté par les présents inventeurs que le lactate de potassium permet de réaliser une extraction du composé déterminé de la solution d'alimentation plus rapide que la grande majorité des agents osmotiques proposés par l'art antérieur pour l'osmose directe.

En outre, de manière très surprenante, il a été constaté par les présents inventeurs que le lactate de potassium permet de réaliser une extraction au moins aussi rapide, et qui plus est accompagnée d'une rétrodiffusion plus faible, que le lactate de sodium. Ce résultat est d'autant plus inattendu qu'il est bien connu de l'homme du métier que pour un même anion, les sels contenant du potassium diffusent plus vite à travers les membranes que leurs homologues possédant du sodium en tant que cation. Ainsi, l'homme du métier n'aurait nullement envisagé de mettre en œuvre du lactate de potassium comme alternative au lactate de sodium pour former des agents osmotiques pour l'osmose directe.

En particulier, lors de la mise en œuvre du procédé d'osmose directe selon l'invention, le flux de rétrodiffusion du lactate de potassium à travers la membrane est très bas, et le rapport du flux du composé déterminé extrait de la solution d'alimentation sur le flux de rétrodiffusion (c'est-à-dire le volume du composé déterminé extrait de la solution d'alimentation, par gramme de sel ayant diffusé de la solution d'extraction dans la solution d'alimentation) est particulièrement élevé. Ceci reflète d'une grande efficacité du procédé d'osmose directe selon l'invention.

Une telle efficacité est d'autant plus importante aux fortes concentrations de lactate de potassium dans la solution d'extraction, en particulier aux concentrations supérieures ou égales à 5 mol/l.

Le lactate de potassium préconisé par la présente invention présente en outre les avantages d'être compatible avec une utilisation dans le domaine alimentaire, au contact des aliments, ainsi que d'être compatible avec les membranes mises en œuvre de manière classique dans le domaine des procédés d'osmose directe, par exemple avec les membranes en tri acétate de cellulose.

Dans la grande majorité des cas, le composé déterminé à extraire de la solution d'alimentation par le procédé selon l'invention est l'eau. Dans de tels cas, la solution d'extraction selon l'invention est avantageusement une solution aqueuse contenant du lactate de potassium. L'invention n'exclut pas pour autant que le procédé selon l'invention soit mis en œuvre pour l'extraction de tout autre composé d'intérêt de la solution d'alimentation, par un choix adéquat d'une part de la membrane, et d'autre part du solvant entrant dans la composition de la solution d'extraction.

Dans des modes de mise en œuvre particuliers de l'invention, la solution d'extraction est une solution aqueuse contenant du lactate de potassium, qui constitue en outre de préférence le composant majoritaire dans le véhicule aqueux, c'est-à-dire le composant présent en plus grande quantité. Préférentiellement, la solution d'extraction comprend essentiellement du lactate de potassium en solution dans l'eau.

Dans des modes de mise en œuvre particuliers de l'invention, la concentration en lactate de potassium dans la solution d'extraction est comprise entre 5 et 9,4 mol/l. Comme exposé précédemment, à de telles concentrations, l'efficacité du procédé d'osmose directe selon l'invention est particulièrement élevée.

La concentration de 9,4 mol/l, qui correspond à la concentration de viscosité maximale acceptable de la solution d'extraction pour la mise en œuvre du procédé d'osmose directe, est particulièrement préférée dans le cadre de l'invention, car permettant d'obtenir des performances très élevées d'extraction du composé déterminé de la solution d'alimentation.

Dans des modes de mise en œuvre particuliers de l'invention, la membrane choisie comporte, au niveau de la première face, une couche dite active, et, au niveau de la deuxième face, une couche dite support, la couche active étant plus dense que la couche support. Selon l'invention, la solution d'alimentation est ainsi mise en contact avec la couche active de la membrane, et la solution d'extraction avec la couche support.

Une telle caractéristique permet avantageusement d'obtenir une plus grande efficacité du procédé d'osmose directe selon l'invention, en particulier en termes de sélectivité vis-à-vis des composés transférés à travers la membrane.

Ne sont pas exclus pour autant de la présente invention les modes de mise en œuvre dans lesquels la première face de la membrane, au contact de la solution d'alimentation, est formée par une couche support, et la deuxième face de la membrane, au contact de la solution d'extraction, est formée par une couche active, plus dense.

Toute autre configuration de la membrane entre en outre également dans la portée de la présente invention, par exemple les configurations dans lesquelles la membrane comporte deux couches actives entre lesquelles est interposée une couche support, chacune de la solution d'alimentation et de la solution d'extraction étant alors en contact avec une couche active. Parmi ces couches actives, l'une peut être plus dense que l'autre.

Dans des modes de mise en œuvre particuliers de l'invention, le procédé comprend une étape finale de régénération de la solution d'extraction, c'est-à-dire de la solution de lactate de potassium, par élimination de tout ou partie du composé déterminé qu'elle contient, qui a notamment été extrait de la solution d'alimentation. Cette étape de régénération peut notamment être réalisée par évaporation dudit composé déterminé, en particulier lorsque ce dernier est de l'eau. Une telle régénération est notamment rendue possible par une caractéristique particulière du lactate de potassium préconisé par l'invention, à savoir une bonne thermo-stabilité.

Selon un deuxième aspect, la présente invention concerne l'utilisation de lactate de potassium dans un procédé d'extraction par osmose directe d'un composé déterminé contenu dans une solution liquide.

Selon l'invention, le lactate de potassium est mis en œuvre en tant que composant, de préférence composant majoritaire, de la solution d'extraction utilisée dans le procédé d'osmose directe, en solution dans un solvant.

Cette solution d'extraction peut répondre à l'une ou plusieurs des caractéristiques décrites ci-avant en référence au procédé selon l'invention, d'extraction par osmose directe d'un composé donné contenu dans une solution liquide.

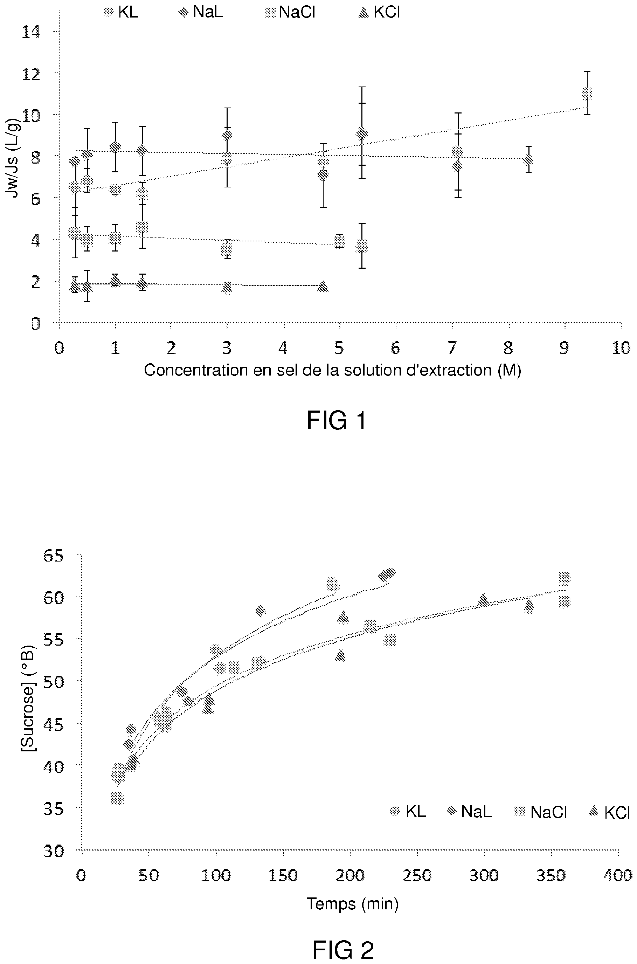

Les caractéristiques et avantages de l'invention apparaîtront plus clairement à la lumière des exemples de mise en œuvre ci-après, fournis à simple titre illustratif et nullement limitatifs de l'invention, avec l'appui des figures 1 à 3, dans lesquelles :
- la figure 1 représente un graphe montrant le flux de sel spécifique (Jw/Js) en fonction de la concentration en sel initiale de la solution d'extraction, à l'issue d'un procédé d'extraction d'eau par osmose directe à partir d'une solution d'alimentation constituée uniquement d'eau, pour des solutions d'extraction comportant respectivement du lactate de potassium (KL), du lactate de sodium (NaL), du chlorure de potassium (KCl) et du chlorure de sodium (NaCl) ;
- la figure 2 représente un graphe montrant la concentration en sucrose de la solution d'alimentation en fonction du temps, lors de la mise en œuvre d'un procédé d'extraction d'eau par osmose directe à partir d'une solution d'alimentation constituée de sucrose dans un véhicule aqueux, pour des solutions d'extraction comportant respectivement du lactate de potassium (KL), du lactate de sodium (NaL), du chlorure de potassium (KCl) et du chlorure de sodium (NaCl) ;

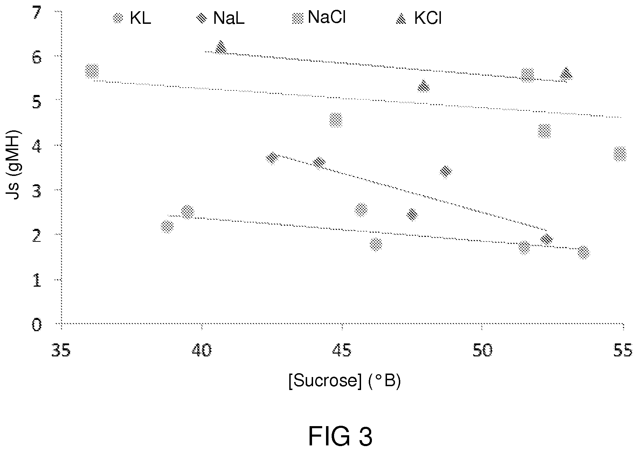

- et la figure 3 représente un graphe montrant le flux de rétrodiffusion du sel (Js) à travers la membrane en fonction de la concentration en sucrose dans la solution d'alimentation, lors de la mise en œuvre d'un procédé d'extraction d'eau par osmose directe à partir d'une solution d'alimentation constituée de sucrose dans un véhicule aqueux, pour des solutions d'extraction comportant respectivement du lactate de potassium (KL), du lactate de sodium (NaL), du chlorure de potassium (KCl) et du chlorure de sodium (NaCl).

### A/ Dispositif et procédé d'osmose directe

Pour les expériences ci-après, il est mis en œuvre un dispositif d'osmose directe classique en lui-même, constitué d'une cellule (CF042A, Sterlitech) comprenant une membrane semi-perméable et deux circuits fermés, dans lesquels circulent respectivement, au contact de la membrane, d'une part la solution d'alimentation, contenant le composé à extraire, et d'autre part la solution d'extraction.

La membrane mise en œuvre est une membrane commerciale formée en tri acétate de cellulose (CTA) (Hydration Technology Innovations) possédant une surface active de 42 cm². La couche active de la membrane est placée en contact avec le circuit de circulation de la solution d'alimentation, et la couche support de la membrane est placée en contact avec le circuit de circulation de la solution d'extraction.

Chaque solution est entrainée dans le circuit associé par une pompe péristaltique à un débit de 40 l/h.

### B/ Expériences

Dans les expériences ci-après, il est testé différentes solutions d'extraction, comprenant respectivement, en solution dans l'eau :
- du lactate de potassium conformément à la présente invention ;
- à titre comparatif, différents composés proposés par l'art antérieur : du lactate de sodium, du chlorure de potassium ou du chlorure de sodium.

En particulier, le chlorure de sodium est utilisé comme agent osmotique de référence car il est abondamment étudié dans l'art antérieur.

Pour chacun de ces sels, différentes concentrations sont testées.

### B.1/ Série d'expériences 1

Dans une première série d'expériences, les performances du système d'osmose directe obtenues avec les quatre solutions d'extraction ci-dessus sont comparées dans des conditions « idéales » d'utilisation, dans lesquelles de l'eau pure est utilisée comme solution d'alimentation, le composé à en extraire étant l'eau.

Les gammes de concentrations initiales en sel dans la solution d'extraction testées vont de 0,3 M (pour la concentration minimale) à la concentration de saturation ou de viscosité maximale acceptable de chaque agent osmotique : 4,7 M pour le chlorure de potassium (KCl), 5,4 M pour le chlorure de sodium (NaCl), 9,4 M pour le lactate de potassium (KL) et 8,5 M pour le lactate de sodium (NaL).

Chaque essai dure 30 min.

Les volumes initiaux et finaux de solution d'alimentation et de solution d'extraction, ainsi que les conductivités initiales et finales de la solution d'alimentation, sont relevés.

Ces conductivités permettent de calculer les concentrations en sels dans les solutions. Les flux d'eau extraite (Jw en L /(m².h) ou LMH) et le flux de rétrodiffusion du sel (Js en g/(m².h) ou gMH) à travers la membrane sont alors calculés, ainsi que le flux de sel spécifique (Jw/Js en L/g), représentant le volume d'eau extraite par gramme de sel ayant diffusé dans la solution d'alimentation. Une valeur élevée de cet indice indique une meilleure performance de l'agent osmotique.

Les résultats obtenus pour chaque sel testé, en termes de flux de sel spécifique (Jw/Js) en fonction de la concentration en sel initiale de la solution d'extraction, sont montrés sur la figure 1.

On y observe que le flux de sel spécifique obtenu pour le procédé selon la présente invention, mettant en œuvre le lactate de potassium, est bien plus élevé que celui obtenu pour le chlorure de potassium et pour le chlorure de sodium, et ce à toutes les concentrations testées. Il est en outre plus élevé que celui obtenu pour le lactate de sodium aux concentrations les plus élevées, supérieures ou égales à 5 M environ.

### B.2/ Série d'expériences 2

Dans une deuxième série d'expériences, les performances du système d'osmose directe obtenues avec les quatre solutions d'extractions décrites ci-dessus sont comparées pour la concentration d'une solution aqueuse de sucrose de 30°B à 60°B, le composé à en extraire étant l'eau.

Les concentrations initiales en sel dans la solution d'extraction testées sont : 4,7 M pour le chlorure de potassium (KCl), 5,4 M pour le chlorure de sodium (NaCl), 9,4 M pour le lactate de potassium (KL) et 8,5 M pour le lactate de sodium (NaL).

50 mL d'une solution de sucrose (solution d'alimentation) et 1 l de solution d'extraction sont introduits dans le système d'osmose directe.

Des mesures de flux et des prises d'échantillons pour la détermination des concentrations en sels sont réalisées à chaque 20 mL d'eau extraite de la solution d'alimentation. Les concentrations en lactate ayant rétrodiffusé dans la solution d'alimentation sont analysées avec des kits enzymatiques. Un volume de 20 mL de solution d'alimentation concentrée en sucrose à 30°B est alors ajouté dans le système. De cette façon, le volume de solution d'alimentation varie toujours entre 70 mL et 50 mL (le volume mort du système étant de 50 mL).

Les flux d'eau extraite (Jw en L/(m².h)) et de rétrodiffusion du sel (Js en g/(m².h)) sont alors calculés.

Les résultats obtenus, en termes de concentration en sucrose dans la solution d'alimentation en fonction du temps, sont montrés sur la figure 2. On y observe que la concentration de la solution modèle de sucrose jusqu'à 60 ° B s'effectue plus rapidement lorsque la solution d'extraction du lactate de potassium ou du lactate de sodium.

L'évolution du flux de rétrodiffusion du sel (Js) à travers la membrane, en fonction de la concentration en sucrose dans la solution d'alimentation, est montrée sur la figure 3. Au cours de la concentration de la solution d'alimentation, on observe que le flux de sel rétrodiffusé diminue lorsque la concentration en sucrose de la solution d'alimentation augmente, et ce quel que soit le sel utilisé. Ceci s'explique aisément par le fait qu'au cours de la concentration de la solution d'alimentation, la pression osmotique de cette dernière augmente et donc la différence de pression osmotique entre la solution d'alimentation et la solution d'extraction diminue.

On observe en outre que le lactate de potassium est associé à un flux de rétrodiffusion plus faible que les autres sels étudiés. Ces résultats sont cohérents avec ceux obtenus avec de l'eau pure en tant que solution d'alimentation.

Le flux de sucrose à travers la membrane a en outre été calculé pour chaque sel testé. Il atteint une valeur de 0,10 gMH, avec une variation de 0,07 gMH, quel que soit le sel utilisé. L'utilisation conforme à la présente invention d'une solution d'extraction à base de lactate de potassium n'a donc pas d'impact négatif sur le passage de sucre à travers la membrane, par rapport aux autres sels testés.

## Revendications

1. Procédé d'extraction par osmose directe d'un composé déterminé contenu dans une solution liquide, dite solution d'alimentation, selon lequel on fait circuler ladite solution d'alimentation au contact d'une première face d'une membrane apte à permettre sélectivement le transfert par osmose dudit composé déterminé, et on fait circuler une deuxième solution liquide, dite solution d'extraction, au contact d'une deuxième face de ladite membrane opposée à ladite première face, ledit procédé étant **caractérisé en ce que** la solution d'extraction contient du lactate de potassium.

2. Procédé selon la revendication 1, selon lequel la solution d'extraction est une solution aqueuse contenant du lactate de potassium.

3. Procédé selon l'une quelconque des revendications 1 à 2, selon lequel la concentration en lactate de potassium dans la solution d'extraction est comprise entre 5 et 9,4 mol/l.

4. Procédé selon l'une quelconque des revendications 1 à 3, comprenant une étape finale de régénération de la solution d'extraction, par élimination dudit composé déterminé qu'elle contient, notamment par évaporation dudit composé.

5. Procédé selon l'une quelconque des revendications 1 à 4, selon lequel la membrane comporte, au niveau de la première face, une couche dite active, et, au niveau de la deuxième face, une couche dite support, ladite couche active étant plus dense que ladite couche support.

6. Utilisation de lactate de potassium dans un procédé d'extraction par osmose directe d'un composé déterminé contenu dans une solution liquide.

## Patentansprüche

1. Verfahren zur Extraktion einer bestimmten Verbindung, die in einer Einspeiselösung genannten flüssigen Lösung enthalten ist, durch Vorwärtsosmose, wobei die Einspeiselösung in Kontakt mit einer ersten Seite einer Membran zirkuliert wird, die in der Lage ist, die Überführung der bestimmten Verbindung durch Osmose selektiv zu ermöglichen, und eine Extraktionslösung genannte zweite flüssige Lösung in Kontakt mit einer zweiten Seite der Membran zirkuliert wird, die der ersten Seite gegenüberliegt, wobei das Verfahren **dadurch gekennzeichnet ist, dass** die Extraktionslösung Kaliumlactat enthält.

2. Verfahren nach Anspruch 1, wobei die Extraktionslösung eine wässrige Lösung ist, die Kaliumlactat enthält.

3. Verfahren nach einem der Ansprüche 1 bis 2, wobei die Kaliumlactat-Konzentration in der Extraktionslösung im Bereich zwischen 5 und 9,4 mol/l liegt.

4. Verfahren nach einem der Ansprüche 1 bis 3, das einen abschließenden Schritt des Regenerierens der Extraktionslösung durch Entfernen der bestimmten Verbindung, die sie enthält, insbesondere durch Verdampfen der Verbindung umfasst.

5. Verfahren nach einem der Ansprüche 1 bis 4, wobei die Membran im Bereich der ersten Seite eine sogenannte aktive Schicht, und im Bereich der zweiten Seite eine sogenannte Stützschicht umfasst, wobei die aktive Schicht dichter ist als die Stützschicht.

6. Verwendung von Kaliumlactat in einem Verfahren zur Extraktion einer bestimmten Verbindung, die in einer flüssigen Lösung enthalten ist, durch Vorwärtsosmose.

## Claims

1. Method for the extraction by forward osmosis of a given compound contained in a liquid solution, referred to as the feed solution, wherein said feed solution is circulated in contact with a first face of a membrane able to selectively allow the transfer of said given compound by osmosis, and a second liquid solution, referred to as the extraction solution, is circulated in contact with a second face of said membrane opposite to said first face, said method being **characterised in that** the extraction solution contains potassium lactate.

2. Method according to claim 1, wherein the extraction solution is an aqueous solution containing potassium lactate.

3. Method according to either claim 1 or claim 2, wherein the concentration of potassium lactate in the extraction solution is between 5 and 9.4 mol/l.

4. Method according to any one of claims 1 to 3, comprising a final step of regenerating the extraction solution, by eliminating said given compound that it contains, in particular by evaporation of said compound.

5. Method according to any one of claims 1 to 4, wherein the membrane comprises, at the first face, a so-called active layer and, at the second face, a so-called support layer, said active layer being denser than said support layer.

6. Use of potassium lactate in a method for the extraction by forward osmosis of a given compound contained in a liquid solution.
